# EUROPEAN PATENT APPLICATION

(11) **EP 4 749 690 A1**
(43) Date of publication of application: **27.05.2026**
(21) Application number: 25213784.9
(22) Date of filing: 05.11.2025
(51) Int. Cl.: H01M 4/02, H01M 4/04, H01M 4/13, H01M 4/66, H01M 10/052, H01M 10/0585, H01M 50/533, H01M 50/54, H01M 50/557

(54) **ELECTRODE AND SECONDARY BATTERY INCLUDING SAME AND METHOD OF MANUFACTURING AN ELECTRODE**

(30) Priority: 21.11.2024 KR 20240166861
(71) Applicant: SAMSUNG SDI CO., LTD., Yongin-si, Gyeonggi-do 17084 (KR)
(72) Inventor: BYEON, Junho, 17084 Yongin-si (KR)
(74) Representative: Maiwald GmbH

(57) **Abstract**

An electrode includes: an insulating layer having a through hole; a first metal layer on one surface of the insulating layer; a second metal layer on another surface of the insulating layer; a first active material layer on the first metal layer; a second active material layer on the second metal layer; and a connecting metal layer in the through hole, and electrically connecting the first metal layer to the second metal layer.

## Description

### BACKGROUND

### 1. Field

Aspects of embodiments of the present disclosure relate to an electrode, a secondary battery including the electrode, and a method for manufacturing the electrode.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

For weight reduction, cost reduction, stability enhancement, and energy density increase of secondary batteries, various research and development have been ongoing.

The above information disclosed in this Background section is for enhancement of understanding of the background of the present disclosure, and therefore, it may contain information that does not constitute related (or prior) art.

### SUMMARY

An electrode substrate may be formed of a metal, which may be heavy. Recently, a composite material may be used in which a thin metal layer is formed on both sides (e.g., opposite sides) of an insulating layer made of a lightweight material, such as PET. The composite material may be formed by welding a separate material onto a thin metal layer to electrically connect the metal layers formed on both sides (e.g., opposite sides) of the insulating layer to each other, which may cause a quality deterioration due to a welding process of the welding.

Embodiments of the present disclosure may be directed to an electrode having a lightweight and an improved quality, a secondary battery including the electrode assembly, and a manufacturing method of the electrode.

These and other aspects and features of the present disclosure will be described in or will be apparent from the following description of embodiments of the present disclosure.

According to one or more embodiments of the present disclosure, an electrode includes: an insulating layer having a through hole; a first metal layer on one surface of the insulating layer; a second metal layer on another surface of the insulating layer; a first active material layer on the first metal layer; a second active material layer on the second metal layer; and a connecting metal layer in the through hole, and electrically connecting the first metal layer to the second metal layer.

In an embodiment, the insulating layer may include: a base plate; and a protrusion protruding from one side of the base plate, and having the through hole.

In an embodiment, the through hole may include a plurality of through holes in the protrusion.

In an embodiment, the through hole may have a shape corresponding to a shape of the protrusion, the shape of the through hole having a smaller area than the shape of the protrusion.

In an embodiment, the first metal layer may include a first metal base part on one surface of the base plate, and a first electrode tab part on one surface of the protrusion. The second metal layer may include a second metal base part on another surface of the base plate, and a second electrode tab part on another surface of the protrusion. The first electrode tab part and the second electrode tab part may be electrically connected to each other by being coupled with the connecting metal layer.

In an embodiment, the first active material layer may be on the first metal base part, and the second active material layer may be on the second metal base part.

According to one or more embodiments of the present disclosure, a secondary battery includes: an electrode assembly including a first electrode, a separator, and a second electrode; and a case accommodating the electrode assembly. At least one of the first electrode or the second electrode includes: an insulating layer having a through hole; a first metal layer on one surface of the insulating layer; a second metal layer on another surface of the insulating layer; a first active material layer on the first metal layer; a second active material layer on the second metal layer; and a connecting metal layer in the through hole, and electrically connecting the first metal layer to the second metal layer.

In an embodiment, the insulating layer may include: a base plate; and a protrusion protruding from one side of the base plate, and having the through hole.

In an embodiment, the through hole may include a plurality of through holes in the protrusion.

In an embodiment, the through hole may have a shape corresponding to a shape of the protrusion, and the shape of the through hole may have a smaller area than the shape of the protrusion.

In an embodiment, the first metal layer may include a first metal base part on one surface of the base plate, and a first electrode tab part on one surface of the protrusion. The second metal layer may include a second metal base part on another surface of the base plate, and a second electrode tab part on another surface of the protrusion. The first electrode tab part and the second electrode tab part may be coupled to the connecting metal layer, and may be electrically connected to each other through the connecting metal layer.

In an embodiment, the first active material layer may be on the first metal base part, and the second active material layer may be on the second metal base part.

In an embodiment, the first electrode tab part and the second electrode tab part may form an electrode tab, and the electrode tab may include a plurality of stacked electrode tabs that are bonded to each other by an ultrasonic welding or a laser welding.

In an embodiment, the secondary battery may further include a strip terminal having one side end coupled to the electrode tab to be electrically connected to the electrode tab, and another side end protruding outward from the case.

In an embodiment, the secondary battery may further include a lead tab coupled to the electrode tab, and an electrode terminal in the case and electrically connected to the electrode tab.

According to one or more embodiments of the present disclosure, a method for manufacturing an electrode, includes: forming a through hole in an insulating layer; forming a metal layer by coating a metal material on opposite surfaces of the insulating layer and the through hole; forming an electrode plate by forming an active material layer in one area of the metal layer; and forming an electrode by notching the electrode plate.

In an embodiment, the forming of the electrode may include forming an electrode tab on which an active material layer is not formed by notching the electrode plate, and the forming of the through hole in the insulating layer may include forming a plurality of through holes in an area where the electrode tab is formed on the insulating layer.

In an embodiment, the forming of the electrode may include forming an electrode tab on which an active material layer is not formed by notching the electrode plate, and the forming of the through hole in the insulating layer may include forming the through hole to have a shape corresponding to a shape of the electrode tab in a smaller area than that of the electrode tab in a position corresponding to an area where the electrode tab is formed on the insulating layer.

In an embodiment, the forming of the metal layer may include forming a first metal layer on one surface of the insulating layer, forming a second metal layer on another surface of the insulating layer, and electrically connecting the first metal layer to the second metal layer by a connecting metal layer formed in the through hole.

In an embodiment, the forming of the electrode plate may include forming the active material layer on the metal layer coated in an area where the through hole is not formed on the insulating layer.

According to some embodiments of the present disclosure, metal layers formed on both sides (e.g., opposite sides) of an insulating layer that constitutes a secondary battery may be connected to each other through a through hole formed in the insulating layer to form a path for an electric current.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective view illustrating an example of an electrode according to some embodiments of the present disclosure.
FIG. 2 is a partial exploded perspective view illustrating an example of an electrode.
FIG. 3 is a partial cross-sectional view illustrating an example of an electrode.
FIG. 4 is a partial front view illustrating an example of an insulating layer in an electrode.
FIG. 5 is a partial exploded perspective view illustrating an example of an electrode according to some embodiments of the present disclosure.
FIG. 6 is a partial cross-section view illustrating an example of an electrode.
FIG. 7 is a partial front view illustrating an example of an insulating layer of an electrode.
FIG. 8 is a perspective view illustrating an example of a secondary battery according to some embodiments of the present disclosure.
FIG. 9 is a perspective view illustrating an example of an electrode of a secondary battery according to some embodiments of the present disclosure.
FIG. 10 is a partial cross-sectional view illustrating an example of an electrode of a secondary battery according to some embodiments of the present disclosure.
FIG. 11 is a partial cross-sectional view illustrating an example in which an electrode tab is coupled in a secondary battery according to some embodiments of the present disclosure.
FIG. 12 is a perspective view illustrating an example of a secondary battery according to some embodiments of the present disclosure.
FIG. 13 is a cross-sectional view illustrating an example of a secondary battery according to some embodiments of the present disclosure.
FIG. 14 is a flowchart illustrating an example of a manufacturing method of an electrode according to some embodiments of the present disclosure.
FIG. 15 is a view illustrating an example of forming a through hole in a manufacturing method of an electrode according to some embodiments of the present disclosure.
FIG. 16 is a view illustrating an example of forming a metal layer in a manufacturing method of an electrode according to some embodiments of the present disclosure.
FIG. 17 is a view illustrating an example of forming an electrode plate in a manufacturing method of an electrode according to some embodiments of the present disclosure.
FIG. 18 is a view illustrating an example of an electrode plate formed by a manufacturing method of an electrode according to some embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local Patent Law.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (or under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

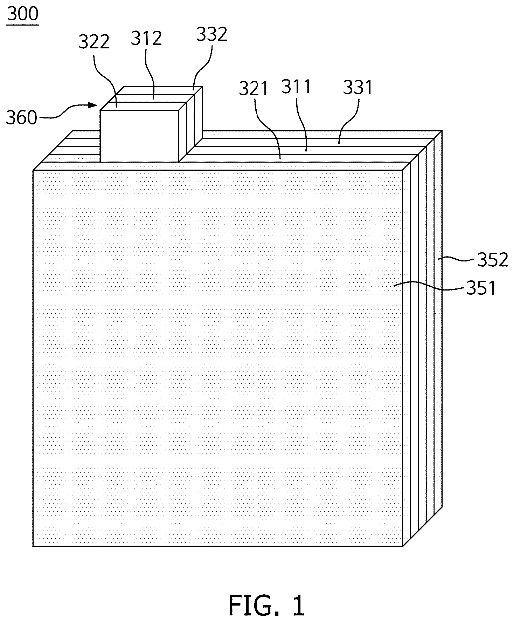

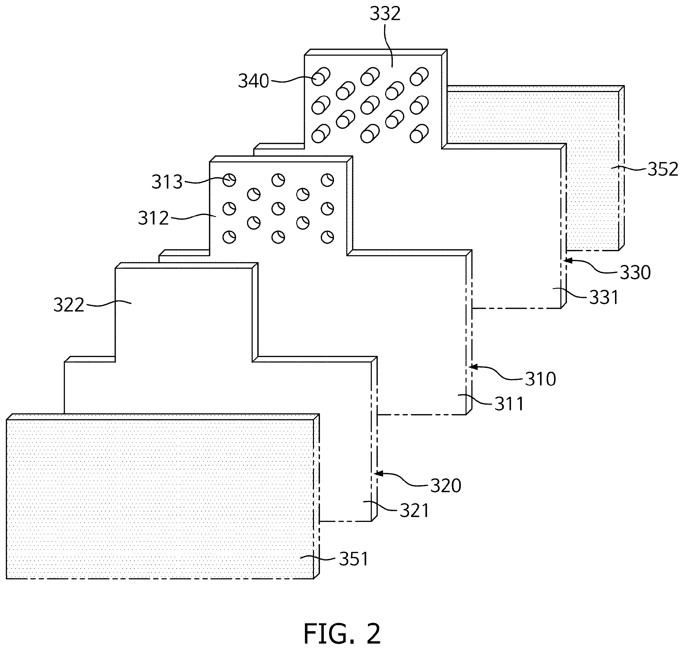

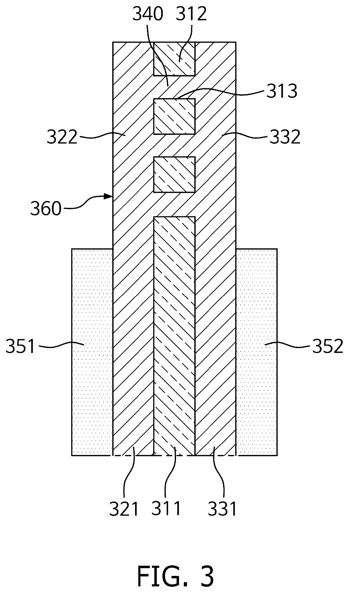

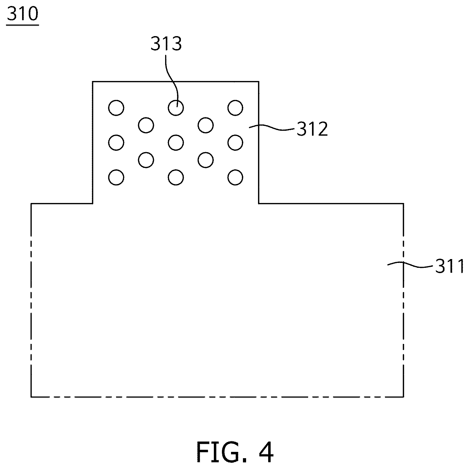

FIG. 1 is a perspective view illustrating an example of an electrode according to some embodiments of the present disclosure. FIG. 2 is a partial exploded perspective view illustrating an example of an electrode. FIG. 3 is a partial cross-sectional view illustrating an example of an electrode. FIG. 4 is a partial front view illustrating an example of an insulating layer in an electrode.

Referring to FIG. 1 to FIG. 4, an electrode 300 according to one or more embodiments of the present disclosure may include an insulating layer 310 having a through hole 313, a first metal layer 320 disposed on one surface of the insulating layer 310, a second metal layer 330 disposed on another surface (e.g., an opposite surface) of the insulating layer 310, a first active material layer 351 disposed on the first metal layer 320, a second active material layer 352 disposed on the second metal layer 330, and a connecting metal layer 340 disposed on the through hole 313 of the insulating layer 310 and electrically connecting the first metal layer 320 to the second metal layer 330. The insulating layer 310 may be formed of an insulating material.

The insulating layer 310 may include (e.g., may be made of) a polymer material. For example, the insulating layer 310 may include (e.g., may be made of) a polyethylene terephthalate (PET) resin. However, the material of the insulating layer 310 is not limited thereto, and may include (e.g., may be made of) a polyester resin, such as polytrimethylene terephthalate (PTT), polybutylene terephthalate (PBT), or polyethylene naphthalate (PEN).

The insulating layer 310 may include a base plate 311, and a protrusion 312 protruding from one side of the base plate 311 with the through hole 313 formed therein. The protrusion 312 may be formed to have a smaller size than that of the base plate 311 to protrude outwardly from one side of the base plate 311. The protrusion 312 may form an electrode tab.

Each of the first metal layer 320 and the second metal layer 330 may be a metal material, such as copper, a copper alloy, nickel, or a nickel alloy, or a metal material, such as aluminum or an aluminum alloy, which is coated on the insulating layer 310. The first metal layer 320 and the second metal layer 330 may be formed of the same metal material as each other, and may function as a positive electrode or a negative electrode.

The first metal layer 320 may include a first metal base part 321 disposed on one surface of the base plate 311, and a first electrode tab part 322 disposed on one surface of the protrusion 312. The second metal layer 330 may include a second metal base part 331 disposed on the other surface (e.g., the opposite surface) of the base plate 311, and a second electrode tab part 332 disposed on the other surface (e.g., the opposite surface) of the protrusion 312.

The first electrode tab part 322 and the second electrode tab part 332 may be electrically connected to each other by being coupled with the connecting metal layer 340. The first electrode tab part 322 and the second electrode tab part 332 disposed on both sides (e.g., opposite sides) of the protrusion 312 may be electrically connected to each other through the connecting metal layer 340 to function as an electrode tab 360 in the electrode 300.

The first active material layer 351 may be disposed on the first metal base part 321, and the second active material layer 352 may be disposed on the second metal base part 331. Therefore, the first metal base part 321 and the second metal base part 331 may be disposed on both sides (e.g., opposite surfaces) of the base plate 311, respectively. The first active material layer 351 and the second active material layer 352 may be disposed on the first metal base part 321 and the second metal base part 331, respectively. The first electrode tab part 322 and the second electrode tab part 332 where the first active material layer 351 and the second active material layer 352 are not located may function as a non-active part, which may form the electrode tab 360.

The first active material layer 351 and the second active material layer 352 may include a lithium transition metal oxide or the like when the first metal layer 320 and the second metal layer 330 function as a positive electrode, and may include graphite, carbon, or the like when the first metal layer 320 and the second metal layer 330 function as a negative electrode.

In some embodiments, the electrode 300 may function as a positive electrode. In this case, the first metal layer 320 and the second metal layer 330 may include (e.g., may be made of), for example, aluminum or an aluminum alloy, and the first active material layer 351 and the second active material layer 352 may include, for example, a lithium transition metal oxide.

In some embodiments, the electrode 300 may function as a negative electrode. In this case, the first metal layer 320 and the second metal layer 330 may be formed of, for example, copper, a copper alloy, nickel, or a nickel alloy, and the first active material layer 351 and the second active material layer 352 may include, for example, graphite or carbon.

The connecting metal layer 340 may be disposed in the through hole 313 formed in the insulating layer 310, and may be electrically connected to the first metal layer 320 and the second metal layer 330 by coupling the first metal layer 320 to the second metal layer 330. The connecting metal layer 340 may be integrally formed when the first metal layer 320 and the second metal layer 330 are formed, by coating a suitable metal material on both surfaces (e.g., opposite surfaces) of the insulating layer 310.

Therefore, there is no need for coupling a separate metal material by welding, for example, to electrically connect the first metal layer 320 and the second metal layer 330 located on both surfaces (e.g., opposite surfaces) of the insulating layer 310 to each other, thereby reducing processes and configurations (e.g., removing or omitting additional processes and configurations).

Referring to FIG. 4, the through hole 313 may include a plurality of through holes in the protrusion 312. The through hole 313 may include a plurality of circular holes spaced apart from one another by a suitable distance (e.g., a predetermined distance) in the protrusion 312. However, the shape of the through hole 313 is not limited to the circular shape, and may be formed in any suitable shape, such as an elliptical shape or a polygonal shape.

A flexibility and a lightweight of the electrode 300 may be ensured by using the insulating layer 310 formed of (e.g., made of) a polymer resin. The first metal layer 320 and the second metal layer 330 may be formed on both surfaces (e.g., opposite surfaces) of the insulating layer 310, respectively, and a current path may be formed by connecting the first metal layer 320 to the second metal layer 330 with the connecting metal layer 340. Therefore, an electrical conductivity and a battery performance may be ensured to be the same or substantially the same as those (e.g., as compared to) an electrode made of a single metal material.

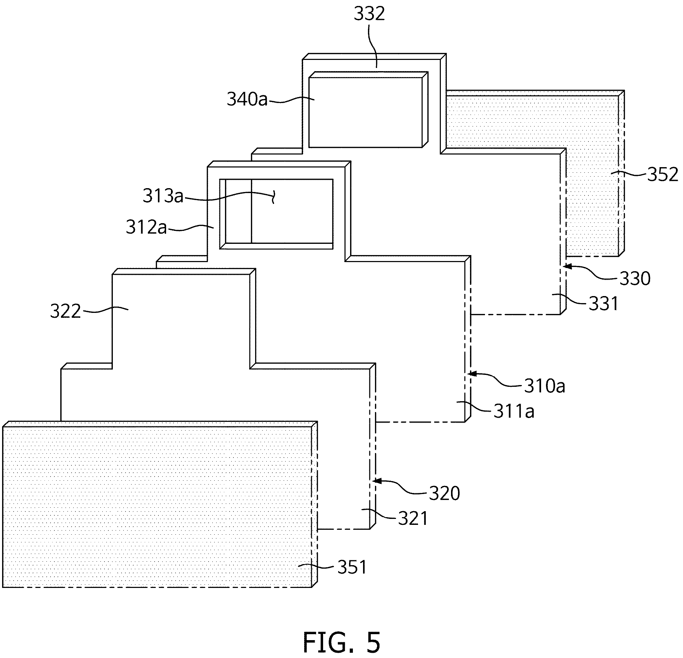

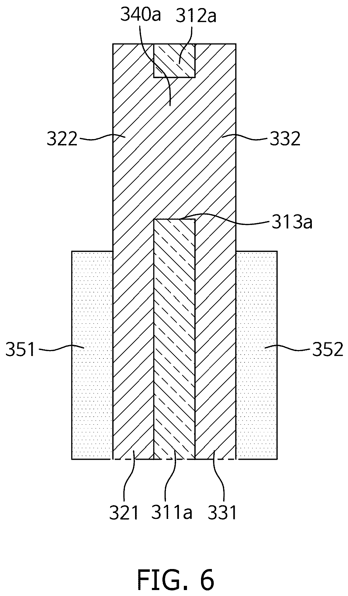

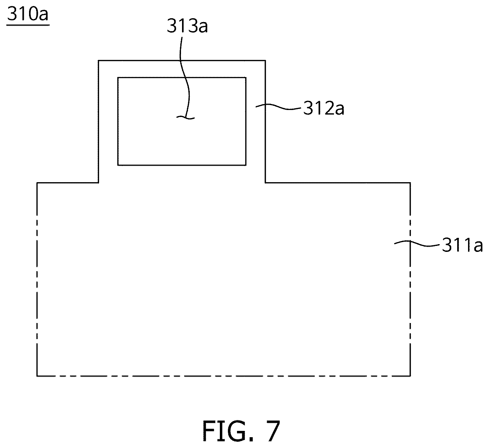

FIG. 5 is a partial exploded perspective view illustrating an example of an electrode according to some embodiments of the present disclosure. FIG. 6 is a partial cross-section view illustrating an example of an electrode. FIG. 7 is a partial front view illustrating an example of an insulating layer of an electrode.

Referring to FIG. 5 to FIG. 7, an electrode according to another embodiment of the present disclosure may have the same or substantially the same configuration as that of the electrode 300 described above with reference to FIG. 2, except the shape of a through hole 313a formed in an insulating layer 310a and the shape of a connecting metal layer 340a disposed in the through hole 313a may be different.

In some embodiments, the through hole 313a may be formed in a shape corresponding to that of a protrusion 312a of the insulating layer 310a, but in a smaller area than that of the protrusion 312a. As illustrated in FIG. 5, when the protrusion 312a is formed in a rectangular shape, the through hole 313a may also be formed in a rectangular shape. The area of the rectangular shape of the through hole 313a may be formed smaller than that of the protrusion 312a, so that a single through hole 313a may be formed inside the protrusion 312a. The horizontal and vertical lengths of the through hole 313a may be formed smaller than the horizontal and vertical lengths of the protrusion 312a. However, the shape of the through hole 313a is not limited to the rectangle, and may be formed in various suitable shapes, such as circle, an oval, or a polygon.

The connecting metal layer 340a disposed in the through hole 313a may be formed in a shape corresponding to that of the through hole 313a. In some embodiments, as shown in FIG. 5, when the through hole 313a is formed in the rectangular shape, the connecting metal layer 340a may also be formed in a rectangular shape corresponding thereto. However, the shape of the connecting metal layer 340a is not limited thereto, and when the shape of the through hole 313a is a circle, an oval, a polygon, or the like, the connecting metal layer 340a may be formed in a corresponding shape.

When the connecting metal layer 340a is formed, the area where the first electrode tab part 322 and the second electrode tab part 332 are connected to each other may be maximized or increased, thereby reducing a resistance between the first electrode tab part 322 and the second electrode tab part 332.

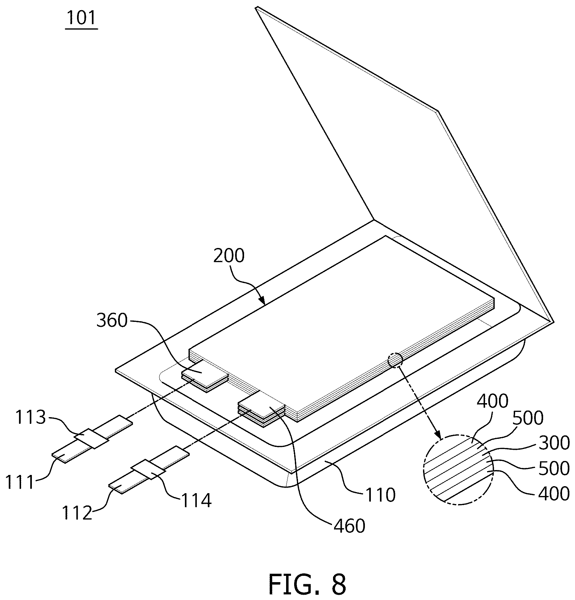

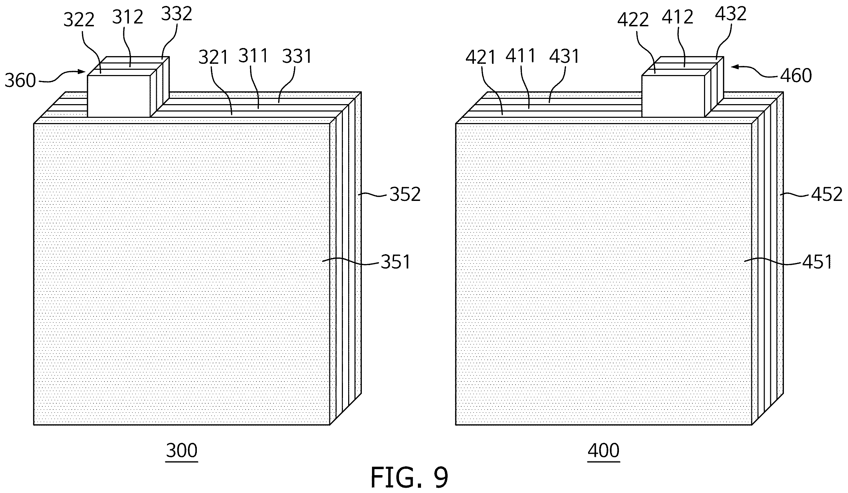

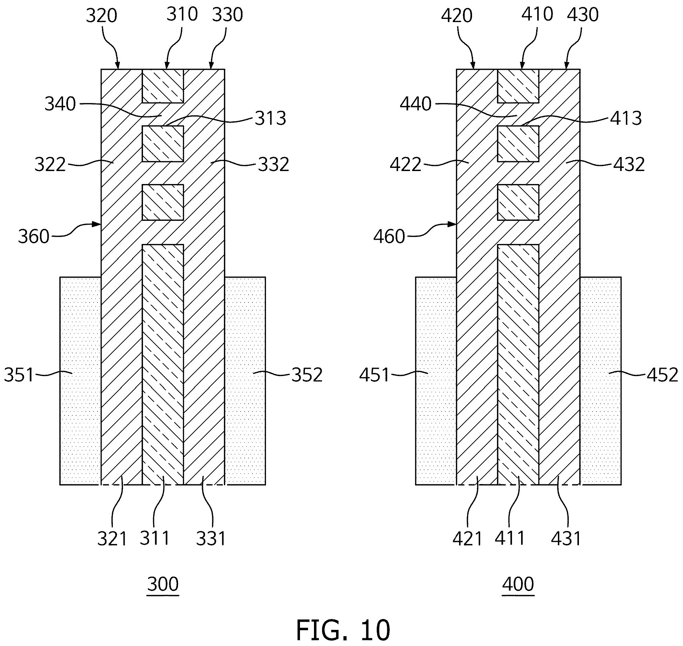

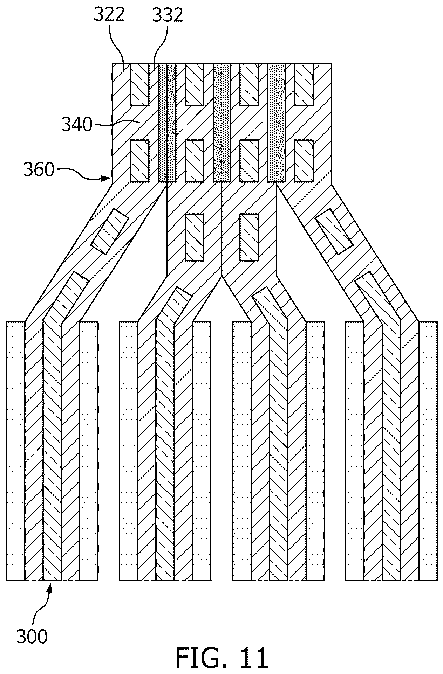

FIG. 8 is a perspective view illustrating an example of a secondary battery according to some embodiments of the present disclosure. FIG. 9 is a perspective view illustrating an example of an electrode of a secondary battery according to some embodiments of the present disclosure. FIG. 10 is a partial cross-sectional view illustrating an example of an electrode of a secondary battery according to some embodiments of the present disclosure. FIG. 11 is a partial cross-sectional view illustrating an example in which an electrode tab is coupled in a secondary battery according to some embodiments of the present disclosure.

Referring to FIG. 8 to FIG. 11, a secondary battery 101 according to one or more embodiments of the present disclosure may include an electrode assembly 200, and a case 110 in which the electrode assembly 200 is accommodated. The electrode assembly 200 may include a first electrode 300, a separator 500, and a second electrode 400. The secondary battery 101 may be a pouch kind.

The case 110 may be sealed at edges in contact with each other with the electrode assembly 200 and an electrolyte accommodated therein. In some embodiments, the case 110 may be formed of a heat-fusible material, and may be sealed by a heat fusion.

In some embodiments, the case 110 may include a multi-layered structure. The case 110 may include a metal thin film, and a polymer layer formed on both sides (e.g., opposite sides) of the metal thin film. The metal thin film may include one or more suitable metal materials, such as steel, stainless steel (SUS), aluminum, and/or the like. The polymer layer may include an insulating material, such as nylon, polyethylene terephthalate (PET), modified polypropylene (CPP), and/or the like. The polymer layer disposed on the outer surface of the metal thin film and the polymer layer disposed on the inner surface of the metal thin film may be formed of different insulating materials from each other. The material and the shape of the case 110 are not limited thereto, and may be formed of any suitable material and any suitable shape, as long as the electrode assembly 200 and the electrolyte are accommodated and sealed therein.

The electrode assembly 200 may be formed by alternately stacking a plurality of first the electrodes 300, the separator 500, and the second electrode 400, each shaped as a thin plate or film. At least one of the first electrode 300 or the second electrode 400 may be formed of a multi-layered substrate or a composite substrate, by coating a metal layer on both sides (e.g., opposite sides) of the insulating layer. The multi-layered substrate or the composite substrate may be formed of the electrode described above with reference to FIG. 1 to FIG. 7.

The first electrode 300 may include an insulting layer 310 formed of an insulating material and having the through hole 313, a first metal layer 320 disposed on one surface of the insulating layer 310, a second metal layer 330 disposed on the other surface (e.g., the opposite surface) of the insulating layer 310, a first active material layer 351 disposed on the first metal layer 320, a second active material layer 352 disposed on the second metal layer 330, and a connecting metal layer 340 disposed in the through hole 313 and electrically connecting the first metal layer 320 to the second metal layer 330.

When the first electrode 300 is formed of a composite substrate and functions as a positive electrode, the first metal layer 320 and the second metal layer 330 may be coated with a metal material, such as aluminum or an aluminum alloy. The first active material layer 351 and the second active material layer 352 may be formed of a positive electrode active material including a binder, a conductive material, and/or the like. The positive electrode active material may include, for example, a lithium transition metal oxide.

The insulating layer 310 may include a base plate 311, and a protrusion 312 protruding from one side of the base plate 311 with the through hole 313 formed therein. The protrusion 312 may be formed to outwardly protrude from one side of the base plate 311 in a smaller size than that of the base plate 311.

Referring to FIG. 4, the through hole 313 may include a plurality of through holes in the protrusion 312. The through hole 313 may include a plurality of circular through holes spaced apart from one another by a suitable distance (e.g., a predetermined distance) in the protrusion 312. The shape of the through hole 313 is not limited to the circular shape, and may be an oval, a polygonal, or the like.

Referring to FIG. 7, the through hole 313a may be formed in a shape corresponding to that of the protrusion 312a of the insulating layer 310a in a smaller area than that of the protrusion 312a. In some embodiments, when the protrusion 312a is formed in a rectangular shape, the through hole 313a may also be formed in a rectangular shape. However, the shape of the through hole 313a is not limited to the rectangular shape, and may be an oval, a polygonal, or the like.

The first metal layer 320 may include a first metal base part 321 disposed on one surface of the base plate 311, and a first electrode tab part 322 disposed on one surface of the protrusion 312. The second metal layer 330 may include a second metal base part 331 disposed on the other surface of the base plate 311, and a second electrode tab part 332 disposed on the other surface of the protrusion 312.

The first electrode tab part 322 and the second electrode tab part 332 may be electrically connected to each other by being coupled with the connecting metal layer 340. The first electrode tab part 322 and the second electrode tab part 332 disposed on both surfaces (e.g., opposite surfaces) of the protrusion 312, respectively, may be electrically connected to each other through the connecting metal layer 340 to form the first electrode tab 360.

Referring to FIG. 11, when a plurality of first electrodes 300 are stacked, a plurality of first electrode tabs 360 may be overlapped with each other and bonded to each other by an ultrasonic welding or a laser welding. The first electrode tab part 322 and the second electrode tab part 332 of each of the first electrode tabs 360 may be electrically connected to each other through the connecting metal layer 340, so that the plurality of first electrode tabs 360 may be electrically connected to each other.

In some embodiments, a second electrode 400 may include an insulating layer 410 formed of an insulating material and including a through hole 413, a first metal layer 420 disposed on one surface of the insulating layer 410, a second metal layer 430 disposed on the other surface (e.g., the opposite surface) of the insulating layer 410, a first active material layer 451 disposed on the first metal layer 420, a second active material layer 452 disposed on the second metal layer 430, and a connecting metal layer 440 disposed in the through hole 413 and electrically connecting the first metal layer 420 to the second metal layer 430.

When the second electrode 400 is formed of a composite substrate and functions as a negative electrode, the first metal layer 420 and the second metal layer 430 may be coated on the composite substrate with a metal material, such as copper, a copper alloy, nickel, or a nickel alloy. The first active material layer 451 and the second active material layer 452 may be formed of a negative electrode active material including a binder, a conductive material, and/or the like. The negative electrode active material may include, for example, graphite.

The insulating layer 410 may include a base plate 411, and a protrusion 412 protruding from one side of the base plate 411 with the through hole 413 formed therein. The protrusion 412 may be formed to outwardly protrude from one side of the base plate 411 in a smaller size than that of the base plate 411.

The first metal layer 420 may include a first metal base part 421 disposed on one surface of the base plate 411, and a first electrode tab part 422 disposed on one surface of the protrusion 412. The second metal layer 430 may include a second metal base part 431 disposed on the other surface of the base plate 411, and a second electrode tab part 432 disposed on the other surface of the protrusion 412.

The first electrode tab part 422 and the second electrode tab part 432 may be electrically connected to each other by being coupled with the connecting metal layer 440. The first electrode tab part 422 and the second electrode tab part 432 disposed on both surfaces (e.g., opposite surfaces) of the protrusion 412, respectively, may be electrically connected to each other through the connecting metal layer 440 to form a second electrode tab 460.

A plurality of electrode tabs 460 may be overlapped with each other and bonded to each other by an ultrasonic welding or a laser welding. The first electrode tab part 422 and the second electrode tab part 432 of each of the second electrode tabs 460 may be electrically connected to each other through the connecting metal layer 440, so that the plurality of second electrode tabs 460 may be electrically connected to each other.

One side end of the secondary battery 101 according to one or more embodiments of the present disclosure may be electrically connected to an electrode tab by coupling, and the other side end of the secondary battery 101 may include a strip terminal that outwardly protrudes from the case 110.

The strip terminal may include a first strip terminal 111 coupled to the first electrode tab 360 to form a current path, and a second strip terminal 112 coupled to the second electrode tab 460 to form a current path. The case 110 may accumulate the first strip terminal 111 and the second strip terminal 112 with respective ends coupled to the first electrode tab 360 and the second electrode tab 460 by a welding and the like, and the other respective ends of the first strip terminal 111 and the second strip terminal 112 may outwardly protrude from the case 110 to be electrically connected to an external terminal.

The first strip terminal 111 and the second strip terminal 112 may respectively include a first insulating film 113 and a second insulating film 114 formed or placed at portions that contact the case 110. The sealed portion of the case 110 may be formed of a thermally fusible material, and may be coupled and sealed by a heat fusion. The thermally fusible material may have a low adhesion to metals. Therefore, the first insulating film 113 and the second insulating film 114 may be respectively attached to the first strip terminal 111 and the second strip terminal 112, which are formed of a metal material to be easily fused with the case 10.

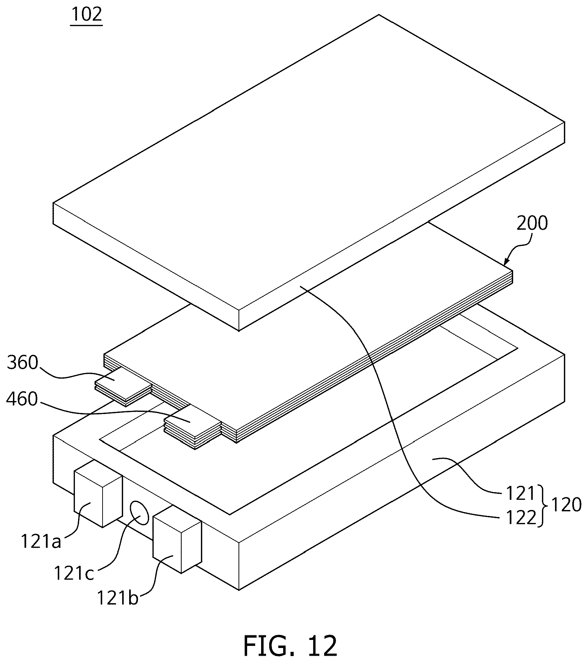

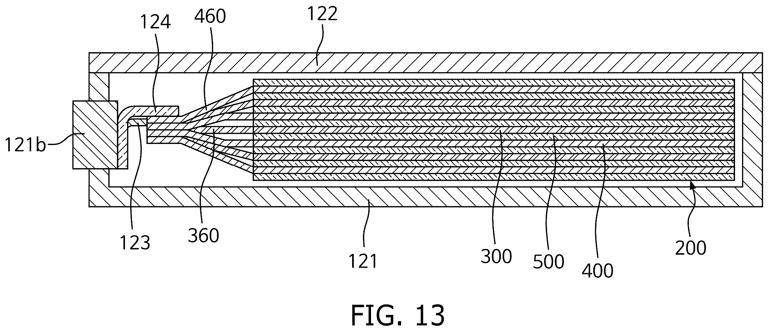

FIG. 12 is a perspective view illustrating an example of a secondary battery according to some embodiments of the present disclosure. FIG. 13 is a cross-sectional view illustrating an example of a secondary battery according to some embodiments of the present disclosure.

Referring to FIG. 12 and FIG. 13, a secondary battery 102 according to another embodiment may include an electrode assembly 200, and a case 120 that accommodates the electrode assembly 200. The electrode assembly 200 may include a first electrode 300, a separator 500, and a second electrode 400. The electrode assembly 200 may be the same or substantially the same as (or similar to) the electrode assembly 200 described above with reference to FIG. 8 to FIG. 11, and thus, redundant description thereof may not be repeated.

The case 120 may provide a space for accommodating the electrode assembly 200, and may form the entire exterior of the secondary battery 102. For example, the case 120 may be formed of stainless steel, but the present disclosure is not limited thereto, and the case 120 may be formed of a conductive metal, such as aluminum, an aluminum alloy, or a nickel-plated steel.

The case 120 may include a case body 121 with one open side and having a hallow space for accommodating the electrode assembly 200, and a case cover 122 coupled to the one open side of the case body 121 to seal the one open side of the case body 121.

The case body 121 and the case cover 122 may be coupled to each other by welding. In some embodiments, a flange portion may be formed on an edge of the case body 121. A portion where the flange portion and the case cover 122 contact each other may be coupled to each other and sealed by welding, and the flange portion may be removed, so that the case body 121 and the case cover 122 may be coupled to each other.

The case 120 may include a first electrode terminal 121a, a second electrode terminal 121b spaced apart from the first electrode terminal 121a by a suitable distance (e.g., a predetermined distance), and an injection hole 121c on one side of the case 120. The first electrode terminal 121a and the second electrode terminal 121b may be electrically connected to the first electrode tab 360 and the second electrode tab 460 provided in the electrode assembly 200, respectively. The injection hole 121c may function as a passage to allow an electrolyte to be injected into the inside of the case 120 and be smoothly impregnated. The injection hole 121c may be formed between the first electrode terminal 121a and the second electrode terminal 121b, but the present disclosure is not limited thereto.

The secondary battery 102 according to some embodiments may include a lead tab electrically connected to an electrode tab and an electrode terminal provided in the case 120 by coupling.

The lead tab may include a first lead tab 123 coupled to the first electrode tab 360 to form a current path, and a second lead tab 124 coupled to the second electrode tab 460 to form a current path. The first lead tab 123 and the second lead tab 124 may have respective one side ends coupled to the first electrode tab 360 and the second electrode tab 460 by welding, and the other respective side ends coupled to the first electrode terminal 121a and the second electrode terminal 121b by welding to be electrically connected.

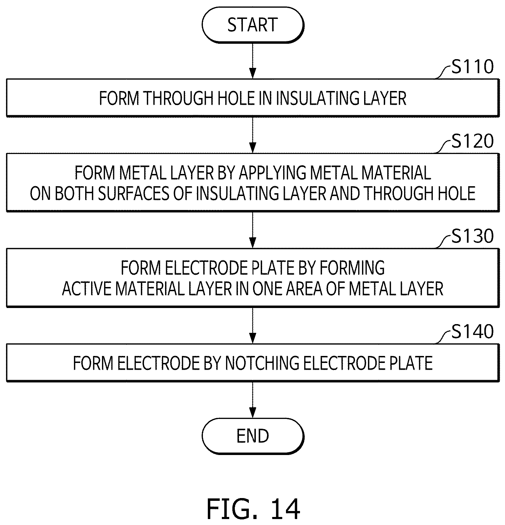

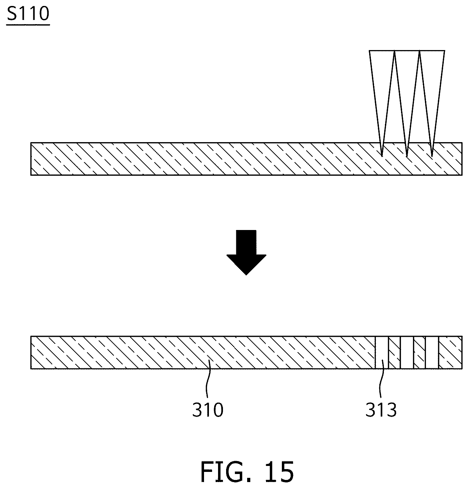

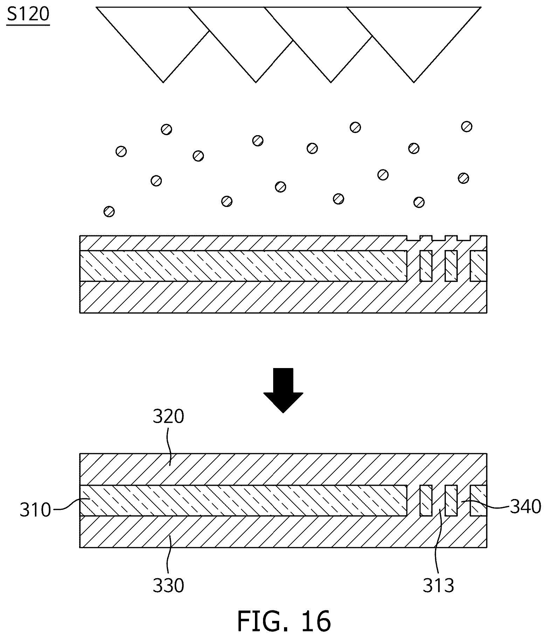

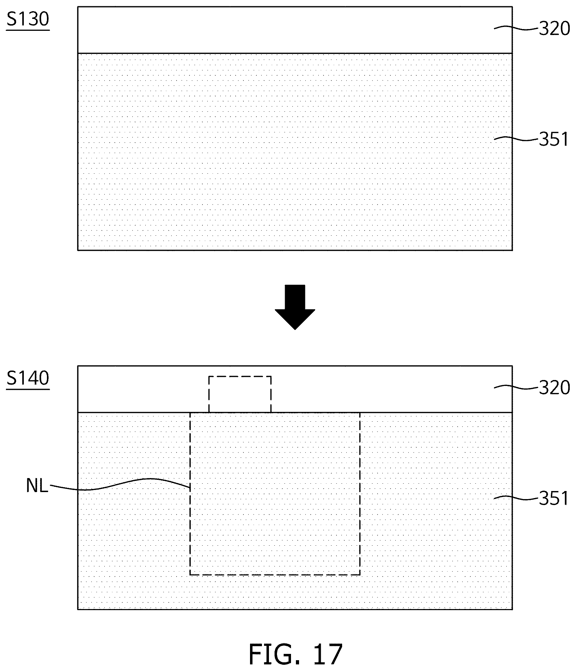

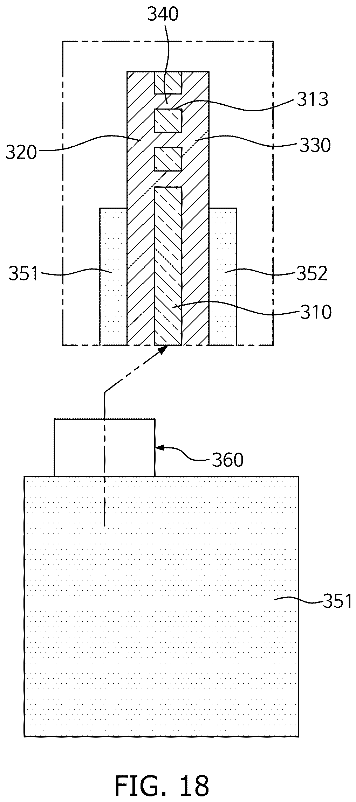

FIG. 14 is a flowchart illustrating an example of a manufacturing method of an electrode according to some embodiments of the present disclosure. FIG. 15 is a view illustrating an example of forming a through hole in a manufacturing method of an electrode according to some embodiments of the present disclosure. FIG. 16 is a view illustrating an example of forming a metal layer in a manufacturing method of an electrode according to some embodiments of the present disclosure. FIG. 17 is a view illustrating an example of forming an electrode plate in a manufacturing method of an electrode according to some embodiments of the present disclosure. FIG. 18 is a view illustrating an example of an electrode plate formed by a manufacturing method of an electrode according to some embodiments of the present disclosure.

Referring to FIG. 14 to FIG. 18, a manufacturing method of an electrode according to some embodiments may start, and a through hole 313 may be formed in an insulating layer 310 (S110), which may include (e.g., may be made of) an insulating material. A metal layer may be formed by applying (e.g., by coating) a metal layer on both surfaces (e.g., opposite surfaces) of the insulating layer 310 and the through hole 313 (S120). An electrode plate may be formed by forming an active material layer 351 in one area of the metal layer (S130). An electrode may be formed by notching an electrode plate (S140), and the method may end.

The forming of the through hole 313 in the insulating layer 310 in S110 may include forming the through hole 313 in one area on one side end portion of the insulating layer 310. The through hole 313 may be formed in an area where the electrode tab 360 is formed.

The through hole 313 may include a plurality of through holes. The through hole 313 may include a plurality of circular shaped holes spaced apart from one another by a suitable distance (e.g., a predetermined distance). The through hole 313 is not limited to the circular shape, and may be formed in an oval shape, a polygonal shape, or the like.

According to another embodiment, a through hole may be formed to have a shape corresponding to that of the electrode tab 360, but in a smaller size than that of the electrode tab 360. When the electrode tab 360 is formed in a rectangular shape, the through hole may also be formed in a rectangular shape. The area of the rectangular shape of the through hole may be smaller than that of the electrode tab 360, and a single through hole may be formed inside the electrode tab 360. However, the through hole is not limited to the rectangular shape, and may be formed in a circular shape, an oval shape, a polygonal shape, or the like.

The forming of the metal layer in S120 may include forming the first metal layer 320 on one surface of the insulating layer 310, forming the second metal layer 330 on the other surface (e.g., the opposite surface) of the insulating layer 310, and electrically connecting the first metal layer 320 to the second metal layer 330 by the connecting metal layer 340 formed in the through hole 313. The first metal layer 320 and the second metal layer 330 may be electrically connected to each other through the connecting metal layer 340, without using or requiring a separate metal material.

In some embodiments, the forming of the metal layer in S120 may include forming a metal layer on both sides (e.g., opposite side) of the insulating layer 310 by applying a metal slurry to both sides (e.g., opposite sides) of the insulating layer 310, or by using a Physical Vapor Deposition (PVD) or Chemical Vapor Deposition (CVD) method to form the metal layer. However, the method of forming the metal layer on both sides (e.g., opposite sides) of the insulating layer 310 is not limited thereto, and other various suitable methods as would be understood by those having ordinary skill in the art may be applied.

The forming of the electrode plate in S130 may include forming an active material layer by coating an active material on one area of the metal layer. One side end portion of the metal layer may not be coated with an active material to form a non-active portion, but other portions may be coated with the active material to form the electrode plate. In some embodiments, a first active material layer 351 may be formed on the first metal layer 320 applied to the area of the insulating layer 310 where the through hole 313 is not formed. In some embodiments, a second active material layer may be formed on a second metal layer.

The forming of the electrode in S140 may include forming the electrode by notching the electrode plate along a notching line NL on the electrode plate.

For example, the forming of the electrode in S140 may include pressing the electrode plate with a press device including a cutter in an electrode form, radiating a laser on the electrode plate along the notching line NL, or cutting the electrode plate along the notching line NL by using a cutting device. The forming of the electrode by notching the electrode plate is not limited thereto, and various other suitable methods as would be understood by those having ordinary skill in the art may be applied.

According to a manufacturing method of an electrode, the first metal layer 320 and the second metal layer 330 may be formed on both surfaces (e.g., opposite surfaces) of the insulting layer 310, respectively. A metal material may be filled in the through hole 313 of the insulating layer 310, and the connecting metal layer 340 that connects the first metal layer 320 to the second metal layer 330 may be integrally formed. Therefore, the connecting metal layer 340 may electrically connect the first metal layer 320 to the second metal layer 330.

### Description of Notations

| | | | |
|---|---|---|---|
| 101, 102 : | Secondary Battery | 110, 120 : | Case |
| 200 : | Electrode Assembly | 300 : | Electrode, First Electrode |
| 310 : | Insulating Layer | 311 : | Base Plate |
| 312 : | Protrusion | 313 : | Through Hole |
| 320 : | First Metal Layer | 321 : | First Metal Base Part |
| 322 : | First Electrode Tab Part | 330 : | Second Metal Layer |
| 331 : | Second Metal Base Part | 332 : | Second Electrode Tab Part |
| 340 : | Connecting Metal Layer | 351 : | First Active Material Layer |
| 352 : | Second Active Material Layer | 360 : | Electrode Tab |
| 400 : | Second Electrode | 500 : | Separator |

## Claims

1. An electrode (300), comprising:
an insulating layer (310) having a through hole (313);
a first metal layer (320) on one surface of the insulating layer (310);
a second metal layer (330) on another surface of the insulating layer (310);
a first active material layer (351) on the first metal layer (320);
a second active material layer (352) on the second metal layer (330); and
a connecting metal layer (340) in the through hole (313), and electrically connecting the first metal layer (320) to the second metal layer (330).

2. The electrode (300) as claimed in claim 1, wherein the insulating layer (310) comprises:
a base plate (311); and
a protrusion (312) protruding from one side of the base plate (311), and having the through hole (313).

3. The electrode (300) as claimed in claim 2, wherein the through hole (313) has a shape corresponding to a shape of the protrusion (312), the shape of the through hole (313) having a smaller area than the shape of the protrusion (312).

4. The electrode (300) as claimed in claim 2 or 3, wherein the first metal layer (320) comprises a first metal base part (321) on one surface of the base plate (311), and a first electrode tab part (322) on one surface of the protrusion (312),
wherein the second metal layer (330) comprises a second metal base part (331) on another surface of the base plate (311), and a second electrode tab part (332) on another surface of the protrusion (312), and
wherein the first electrode tab part (322) and the second electrode tab part (332) are electrically connected to each other by being coupled with the connecting metal layer (340).

5. A secondary battery (101, 102), comprising:
an electrode assembly (200) comprising a first electrode (300), a separator (500), and a second electrode (400); and
a case (120) accommodating the electrode assembly (200),
wherein at least one of the first electrode (300) or the second electrode (400) is an electrode (300) according to claim 1.

6. The secondary battery as claimed in claim 5, wherein the insulating layer (310) comprises:
a base plate (311); and
a protrusion (312) protruding from one side of the base plate (311), and having the through hole (313).

7. The secondary battery as claimed in claim 6, wherein the first metal layer (320) comprises a first metal base part (321) on one surface of the base plate (311), and a first electrode tab part (322) on one surface of the protrusion (312),
wherein the second metal layer (330) comprises a second metal base part (331) on another surface of the base plate (311), and a second electrode tab part (332) on another surface of the protrusion (312), and
wherein the first electrode tab part (322) and the second electrode tab part (332) are coupled to the connecting metal layer (340), and electrically connected to each other through the connecting metal layer (340).

8. The secondary battery as claimed in claim 7, wherein the first electrode tab part (322) and the second electrode tab part (332) form an electrode tab, and
wherein the electrode tab comprises a plurality of stacked electrode tabs that are bonded to each other by an ultrasonic welding or a laser welding.

9. The secondary battery as claimed in claim 8, further comprising a strip terminal having one side end coupled to the electrode tab to be electrically connected to the electrode tab, and another side end protruding outward from the case (120).

10. The secondary battery as claimed in claim 8 or 9, further comprising a lead tab coupled to the electrode tab, and an electrode terminal in the case (120) and electrically connected to the electrode tab.

11. A method for manufacturing an electrode, the method comprising:
forming (S110) a through hole (313) in an insulating layer (310);
forming (S120) a metal layer by coating a metal material on opposite surfaces of the insulating layer (310) and the through hole (313);
forming (S130) an electrode plate by forming an active material layer in one area of the metal layer; and
forming (S140) an electrode by notching the electrode plate.

12. The method as claimed in claim 11, wherein the forming of the electrode comprises forming an electrode tab on which an active material layer is not formed by notching the electrode plate, and
wherein the forming of the through hole (313) in the insulating layer (310) comprises forming a plurality of through holes in an area where the electrode tab is formed on the insulating layer (310).

13. The method as claimed in claim 11 or 12, wherein the forming of the electrode comprises forming an electrode tab on which an active material layer is not formed by notching the electrode plate, and
wherein the forming of the through hole (313) in the insulating layer (310) comprises forming the through hole (313) to have a shape corresponding to a shape of the electrode tab in a smaller area than that of the electrode tab in a position corresponding to an area where the electrode tab is formed on the insulating layer (310).

14. The method as claimed in any one of the claims 11 to 13, wherein the forming of the metal layer comprises forming a first metal layer (320) on one surface of the insulating layer (310), forming a second metal layer (330) on another surface of the insulating layer (310), and electrically connecting the first metal layer (320) to the second metal layer (330) by a connecting metal layer (340) formed in the through hole (313).

15. The method as claimed in any one of the claims 11 to 14, wherein the forming of the electrode plate comprises forming the active material layer on the metal layer coated in an area where the through hole (313) is not formed on the insulating layer (310).
